# EUROPEAN PATENT APPLICATION

(11) **EP 1 953 374 A2**
(43) Date of publication of application: **06.08.2008**
(21) Application number: 08250330.1
(22) Date of filing: 28.01.2008
(51) Int. Cl.: F02D 41/22, F02D 31/00

(54) **Vehicle engine idle speed control**

(30) Priority: 31.01.2007 JP 2007021243; 22.11.2007 JP 2007302502
(71) Applicant: Yamaha Hatsudoki Kabushiki Kaisha, Iwata-shi, Shizuoka 438-8501 (JP)
(72) Inventor: Ota, Tomohiko, Iwata-shi Shizuoka-ken 438-8501 (JP)
(74) Representative: Lamb, Martin John Carstairs

(57) **Abstract**

A vehicle speed sensor (42) detects a rotational speed of a rear wheel (3). A throttle valve (18) is positioned at a downstream location (15a) of an intake pipe. An idle speed control device (9) controls the amount of air flowing through the intake pipe to perform an idle speed control. An ECU (7) detects abnormality (S1,S2) of the idle speed control device (9) based on an intake pipe pressure. The ECU (7) inhibits a rotational speed of the engine (10) from increasing (S5) when an abnormality of the idle speed control device (9) is determined.

## Description

### FIELD OF THE INVENTION

The present invention relates to a vehicle, a controller and a control method therefor, and an abnormality detection system for an idle speed control device and a method of detecting an abnormality for an idle speed control device.

### BACKGROUND TO THE INVENTION

Vehicles in which idling rotational speed control (also called "idle speed control (ISC)") is provided are known, for example from JP-A-Sho 59-46353. More specifically, the ISC is a control that adjusts a rotational speed at idling (i.e., idling rotational speed) by increasing or decreasing an amount of intake air supplied to an engine.

If any abnormality occurs in an ISC device of a vehicle that makes the ISC and an intake air amount to increase, an engine can run too fast. In order to inhibit the engine speed from increasing, a control for inhibiting the engine speed from increasing can be made together with the ISC.

As a method for inhibiting the increase of the engine speed that is resulted from an ISC abnormality, it is applicable, for example, to decrease the engine speed by reducing supplied fuel, by delaying ignition times or by combining these measures if the following conditions (1) through (4) are satisfied:
(1) a throttle opening is equal to or less than a predetermined opening;
(2) a vehicle speed is equal to or lower than a predetermined vehicle speed;
(3) an engine speed is equal to or higher than a predetermined rotational speed; and
(4) not under a condition that the supplied fuel is going to be reduced.

Vehicles controlled in accordance with vehicle speed are increasingly utilized. Lately, vehicles equipped with an electronic continuously variable transmission (hereinafter referred to as "ECVT"), in which more precise vehicle speed is required, have increased. In such a vehicle, i.e., in a vehicle controlled in accordance with vehicle speed, it is preferable to employ a vehicle speed sensor detecting a rotational speed of a drive wheel.

If, however, a vehicle speed sensor which detects the rotational speed of the drive wheel is used, it is difficult to properly practice the method for inhibiting the increase of the engine speed that is resulted from an ISC abnormality. This is because that, if the vehicle speed sensor detecting the rotational speed of the drive wheel is just placed to face the drive wheel, the vehicle speed can be detected even though the vehicle is in a standstill state under an idling condition such that the drive wheel does not contact with the ground by being held using a center stand or the like.

In view of the above problem, it has been proposed, for example, that the vehicle speed sensor for the inhibiting control of the increase of the engine speed is placed to face a driven wheel and another vehicle speed sensor for controlling the vehicle is further placed to face the drive wheel. Thereby, both the control for inhibiting the increase of the engine speed that is resulted from the ISC and an ISC abnormality and accurate control of the vehicle is practicable.

Also, as another method, for example, the vehicle speed sensor may be associated with the drive wheel and a center stand sensor may also be provided for detecting if the center stand is used. When the center stand sensor detects the use of the center stand, the vehicle speed is determined to be zero even though the vehicle speed sensor detects a vehicle speed corresponding to rotation of the drive wheel. Thereby, the drawback of the control for inhibiting the engine speed from increasing resulted from the idling of the drive wheel can be removed.

However, utilizing multiple vehicle speed sensors or a center stand sensor complicates both the intended control and the structure of the vehicle.

The present invention is made under the circumstances, and aims to achieve both precise detection of a vehicle speed and suppression of increase of a rotational speed of an engine resulted from the ISC abnormality without making the structure complicated.

### SUMMARY OF THE INVENTION

A first vehicle according to the present invention includes an engine, a drive wheel, a vehicle speed sensor, an intake pipe, an intake pipe pressure sensor, an intake valve, an idle speed control device and a controlling unit. The drive wheel is driven by power of the engine. The vehicle speed sensor detects a rotational speed of the drive wheel. The intake pipe supplies air to the engine. The intake pipe pressure sensor detects a pressure in the intake pipe. The intake valve is located further away from the engine than the section where the pressure is detected by the intake pipe pressure sensor in the intake valve. The intake valve adjusts the flow passage area of the intake pipe. The idle speed control device performs an idle speed control that controls an idling rotational speed by controlling the amount of air that flows through the intake pipe. The controlling unit detects abnormality of the idle speed control device based on the pressure in the intake pipe detected by the intake pipe pressure sensor. The controlling unit suppresses the increase of the engine speed when an abnormality in the idle speed control device is detected.

A second vehicle according to the present invention includes an engine, an electronic continuously variable transmission, a drive wheel, a vehicle speed sensor, an intake pipe, an intake pipe pressure sensor, an intake valve, an idle speed control device, and a controlling unit. The continuously variable transmission has an input shaft and an output shaft. The input shaft is connected to the engine. In the continuously variable transmission, a change-gear ratio between the input shaft and the output shaft may be continuously controlled. The drive wheel is connected to the output shaft. The vehicle speed sensor detects a rotational speed of the drive wheel. The intake pipe supplies air to the engine. The intake pipe pressure sensor detects a pressure in the intake pipe. The intake valve is located further away from the engine than the section where the pressure is detected by the intake pipe pressure sensor in the intake valve. The intake valve adjusts the flow passage area of the intake pipe. The idle speed control device performs an idle speed control that controls an idling rotational speed by controlling the amount of air that flows through the intake pipe. The controlling unit detects abnormality in the idle speed control device based on the pressure in the intake pipe detected by the intake pipe pressure sensor. The control section suppresses the increase of the engine speed when the abnormality in the idle speed control device is detected..

A controller according to the present invention relates to a controller for a vehicle, the vehicle including an engine, a drive wheel driven by power of the engine, a vehicle speed sensor for detecting a rotational speed of the drive wheel, an intake pipe for supplying air to the engine, an intake pipe pressure sensor for detecting a pressure in the intake pipe, an intake valve located further apart from the engine than a section where the pressure is detected by the intake pipe pressure sensor in the intake pipe for adjusting the flow passage area of the intake pipe, and an idle speed control device performing an idle speed control that controls an idling rotational speed by controlling the amount of air that flows through the intake pipe.

The controller of the present invention detects abnormality of the idle speed control device based on the pressure in the intake pipe detected by the intake pipe pressure sensor. The controller of the present invention suppresses the increase of the engine speed when an abnormality of the idle speed control device is detected.

An abnormality detection system for idle speed control device according to the present invention relates to an abnormality detection system for idle speed control device used for a vehicle, the vehicle including an engine, a drive wheel driven by power of the engine, a vehicle speed sensor detecting a rotational speed of the drive wheel, an intake pipe supplying air to the engine, an intake pipe pressure sensor detecting a pressure in the intake pipe, an intake valve located further apart from the engine than a section where the pressure is detected by the intake pipe pressure sensor in the intake pipe for adjusting flow passage area of the intake pipe, and the idle speed control device performing an idle speed control that controls an idling rotational speed by controlling the amount of air that flows through the intake pipe.

An abnormality detection system for the idle speed control device according to the present invention detects abnormality of the idle speed control device based on the pressure in the intake pipe detected by the intake pipe pressure sensor.

A method of controlling a vehicle according to the present invention relates to a method for controlling a vehicle which includes an engine, a drive wheel driven by power of the engine, a vehicle speed sensor detecting a rotational speed of the drive wheel, an intake pipe supplying air to the engine, an intake pipe pressure sensor detecting a pressure in the intake pipe, an intake valve located further apart from the engine than a section where the pressure is detected by the intake pipe pressure sensor in the intake pipe for adjusting flow passage area of the intake pipe, and an idle speed control device performing an idle speed control that controls an idling rotational speed by controlling the amount of air that flows through the intake pipe.

The method of controlling the vehicle according to the present invention is provided so that abnormality of the idle speed control device is determined based on the pressure in the intake pipe detected by the intake pipe pressure sensor. The method of controlling the vehicle according to the present invention is provided so that a rotational speed of the engine is inhibited from increasing if an abnormality of the idle speed control device is determined.

A method of detecting an abnormality for an idle speed control device according to the present invention is A method of detecting an abnormality for an idle speed control device used for a vehicle, the vehicle including an engine, a drive wheel driven by power of the engine, a vehicle speed sensor detecting a rotational speed of the drive wheel, an intake pipe supplying air to the engine, an intake pipe pressure sensor detecting a pressure in the intake pipe, an intake valve located further apart from the engine than a section where the pressure is detected by the intake pipe pressure sensor in the intake pipe for adjusting flow passage area of the intake pipe, and the idle speed control device performing an idle speed control that controls an idling rotational speed by controlling the amount of air that flows through the intake pipe.

An abnormality determining method according to the present invention is provided for the idle speed control device so that abnormality of the idle speed control device is determined based on the pressure in the intake pipe detected by the intake pipe pressure sensor.

According to an aspect of the present invention there is provided a vehicle comprising:
an engine;
a drive wheel driven by power of the engine;
a vehicle speed sensor for detecting rotational speed of the drive wheel;
an intake pipe for supplying air to the engine;
an intake pipe pressure sensor for detecting pressure in a section of the intake pipe;
an intake valve for adjusting the flow passage area of the intake pipe and located further from the engine than the section of the intake pipe where the pressure is detected by the intake pipe pressure sensor;
an idle speed control device for performing an idle speed control that controls an idling rotational speed by controlling the amount of air flowing through the intake pipe; and
a controlling unit for detecting an abnormality in the idle speed control device based on the pressure in the intake pipe detected by the intake pipe pressure sensor, and for suppressing an increase of the engine speed when an abnormality in the idle speed control device is detected.

The vehicle may further comprise:
an electronic continuously variable transmission having an input shaft connected to the engine and an output shaft and capable of continuously controlling a transmission gear ratio between the input shaft and the output shaft.

The idle speed control device may have:
a bypass pipe for connecting an upstream side and a downstream side of the intake valve of the intake pipe; and
a bypass pipe valve for controlling the amount of air flowing in the intake pipe by controlling the flow passage area of the bypass pipe.

The controlling unit may detect an abnormality of the idle speed control device when the pressure in the intake pipe detected by the intake pipe pressure sensor is higher than a predetermined pressure.

The controlling unit may detect that the idle speed control device is abnormal if the pressure in the intake pipe detected by the intake pipe pressure sensor is higher than a predetermined pressure, a throttle opening is equal to or less than a predetermined opening, and the rotational speed of the engine is equal to or higher than a predetermined rotational speed.

The controlling unit may detect that the idle speed control device is abnormal if the condition that the pressure in the intake pipe detected by the intake pipe pressure sensor is higher than the predetermined pressure is continuously detected for a predetermined period or longer.

The vehicle may further comprise:
a clutch located between the output shaft and the drive wheel to be engaged or disengaged depending on the rotational speed of the engine.

Alternatively, the vehicle may further comprise:
a clutch located between the engine and the input shaft to be engaged or disengaged depending on the engine speed.

The controlling unit may suppress the increase of the engine speed when a throttle opening is equal to or lower than a predetermined opening and the engine speed is higher than the rotational speed at which the clutch engages, after an abnormality in the idle speed control device is detected.

The controlling unit may suppress the increase of the engine speed when an abnormality of the idle speed control device is not detected, and a throttle opening is lower than or equal to a predetermined opening, the vehicle speed detected by the vehicle speed sensor is lower than or equal to a predetermined vehicle speed, and the engine speed is higher than the rotational speed at which the clutch engages.

The vehicle may further comprise a stand for lifting the drive wheel off the ground.

According to another aspect of the present invention there is provided a controller for a vehicle having:
an engine;
a drive wheel driven by power of the engine;
a vehicle speed sensor for detecting rotational speed of the drive wheel;
an intake pipe for supplying air to the engine;
an intake pipe pressure sensor for detecting pressure in a section of the intake pipe;
an intake valve for adjusting the flow passage area of the intake pipe and located further from the engine than the section of the intake pipe where the pressure is detected by the intake pipe pressure sensor; and
an idle speed control device for performing an idle speed control that controls an idling rotational speed by controlling the amount of air flowing through the intake pipe,
wherein an abnormality of the idle speed control device is detected based on the pressure in the intake pipe detected by the intake pipe pressure sensor, and an increase of the engine speed is suppressed when an abnormality of the idle speed control device is detected.

According to a further aspect of the present invention there is provided an abnormality detection system for idle speed control device used in a vehicle having:
an engine;
a drive wheel driven by power of the engine;
a vehicle speed sensor for detecting rotational speed of the drive wheel;
an intake pipe for supplying air to the engine;
an intake pipe pressure sensor for detecting pressure in a section of the intake pipe;
an intake valve for adjusting the flow passage area of the intake pipe and located further from the engine than the section of the intake pipe where the pressure is detected by the intake pipe pressure sensor; and
an idle speed control device for performing an idle speed control that controls an idling rotational speed by controlling the amount of air flowing through the intake pipe,
wherein an abnormality of the idle speed control device is detected based on the pressure in the intake pipe detected by the intake pipe pressure sensor.

According to a still further aspect of the present invention there is provided a method of controlling a vehicle having:
an engine;
a drive wheel driven by power of the engine;
a vehicle speed sensor for detecting rotational speed of the drive wheel;
an intake pipe for supplying air to the engine;
an intake pipe pressure sensor for detecting pressure in a section of the intake pipe;
an intake valve for adjusting the flow passage area of the intake pipe and located further from the engine than the section of the intake pipe where the pressure is detected by the intake pipe pressure sensor; and
an idle speed control device for performing an idle speed control that controls an idling rotational speed by controlling the amount of air flowing through the intake pipe,
wherein the method comprises detecting an abnormality of the idle speed control device based on the pressure in the intake pipe detected by the intake pipe pressure sensor, and then suppressing an increase of the engine speed.

According to another aspect of the present invention there is provided a method of detecting an abnormality of an idle speed control device used in a vehicle having:
an engine;
a drive wheel driven by power of the engine;
a vehicle speed sensor for detecting rotational speed of the drive wheel;
an intake pipe for supplying air to the engine;
an intake pipe pressure sensor for detecting pressure in a section of the intake pipe;
an intake valve for adjusting the flow passage area of the intake pipe and located further from the engine than the section of the intake pipe where the pressure is detected by the intake pipe pressure sensor; and
an idle speed control device for performing an idle speed control that controls an idling rotational speed by controlling the amount of air flowing through the intake pipe, wherein the method comprises the step of detecting an abnormality of the idle speed control device based on the pressure in the intake pipe detected by the intake pipe pressure sensor.

According to the present invention, both precise detection of a vehicle speed and suppression of increase of a rotational speed of an engine resulted from the ISC abnormality can be achieved without making the structure complicated.

### BRIEF DESCRIPTION OF THE DRAWINGS

These and other aspects of the present invention will now be described, by way of example only, with reference to the accompanying drawings, in which:
FIG. 1 is a side view of a two-wheeled motorized vehicle according to one embodiment of the present invention;
FIG. 2 is a sectional view of an engine unit;
FIG. 3 is a partial cross sectional view showing a structure of a CVT;
FIG. 4 is a cross sectional view of the proximity of an intake pipe of an engine;
FIG. 5 is a block diagram illustrating a system for controlling the two-wheeled motorized vehicle;
FIG. 6 is a block diagram illustrating sheave position control;
FIG. 7 is a flowchart of an ISC F/B control;
FIG. 8 is a graph showing relationships between intake pipe pressures and engine speeds;
FIG. 9 is a cross sectional view of the proximity of the intake pipe of the engine in variation 1;
FIG. 10 is a cross sectional view of the proximity of the intake pipe of the engine in a modification of the first embodiment; and
FIG. 11 is a block diagram illustrating a controller in accordance with a second embodiment of the present invention.

### DETAILED DESCRIPTION OF THE DRAWINGS

The first embodiment described relates to a vehicle having a vehicle speed sensor detecting a rotational speed of a drive wheel to control the vehicle based on vehicle speed, to achieve both precise detection of a vehicle speed and suppression of increase of a rotational speed of an engine resulted from an ISC abnormality by detecting the ISC abnormality not based on the vehicle speed but upon an intake pipe pressure without making the structure complicated.

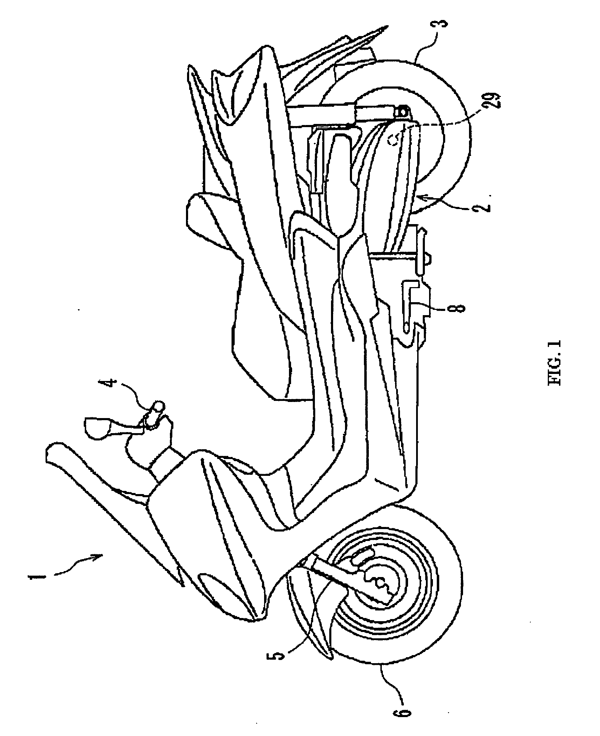

An example of one embodiment of the present invention will now be described in detail, using a two-wheeled motorized vehicle 1 shown in FIG. 1. The embodiment of the present invention is described by using a so-called scooter-type two-wheeled motorized vehicle 1 as an example. However, a vehicle in the invention is not limited to the so-called scooter-type two-wheeled motorized vehicle. For example, the vehicle in the present invention may be a two-wheeled motorized vehicle other than a scooter-type vehicle. More specifically, the vehicle of the present invention can be an off-road type, a motorcycle type, a scooter type, or a so-called moped type. Also, other than two-wheeled motorized vehicle, the vehicle in the invention may be a straddle-type vehicle. Specifically, the vehicle of the present invention may be, for example, an ATV (All Terrain Vehicle) or the like. Further, the vehicle in the invention may be a vehicle other than straddle type vehicle, such as a four-wheeled motorized vehicle.

Also, the present embodiment will be described as a motorcycle 1 having a belt type CVT. However, the vehicle according to the present invention is not limited to this structure. For example, the vehicle according to the present invention can be a vehicle without any CVT. Further, the vehicle according to the present invention can be a vehicle having a CVT which is not of a belt type. For example, the vehicle may have a toroidal type CVT or the like.

FIG. 1 shows a side view of a two-wheeled motorized vehicle 1. The two-wheeled motorized vehicle 1 has a body frame (not shown). An engine unit 2 is suspended from the body frame. A rear wheel 3 is provided at a rear end of the engine unit 2. In the present embodiment of the invention, the rear wheel 3 forms a drive wheel for driving a wheel with power outputted from the engine unit 2.

The body frame has a head pipe (not shown) extending downward from steering handlebars 4. Front forks 5 are connected to a bottom end of the head pipe. A front wheel 6 is rotatably attached to lower ends of the front forks 5. The front wheel 6, which is not drivingly connected to the engine unit 2, forms a driven wheel.

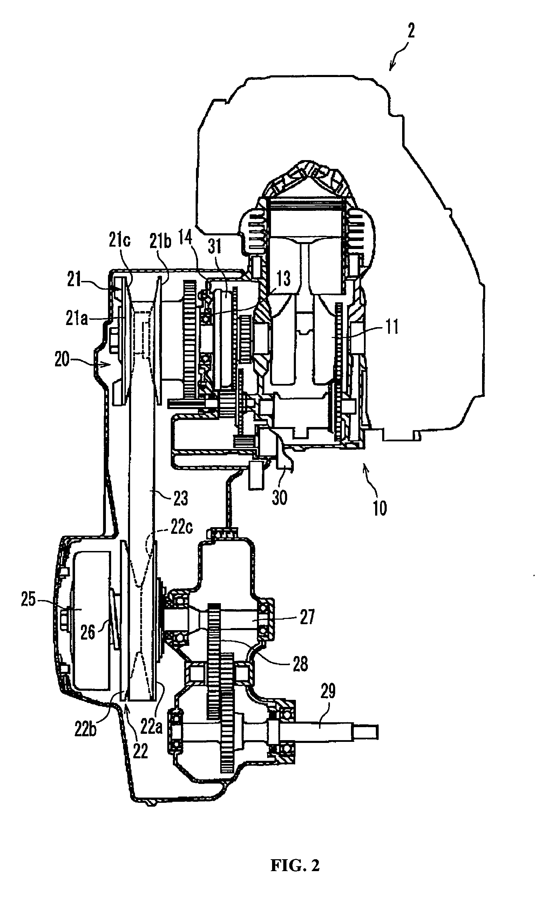

The motorcycle 1 has a center stand 8 which brings the motorcycle 1 to a standstill state under a condition that the rear wheel 3, which functions as the drive wheel, is lifted from the ground.
A structure of the engine unit 2 will now be described with reference to FIGs. 2-4.

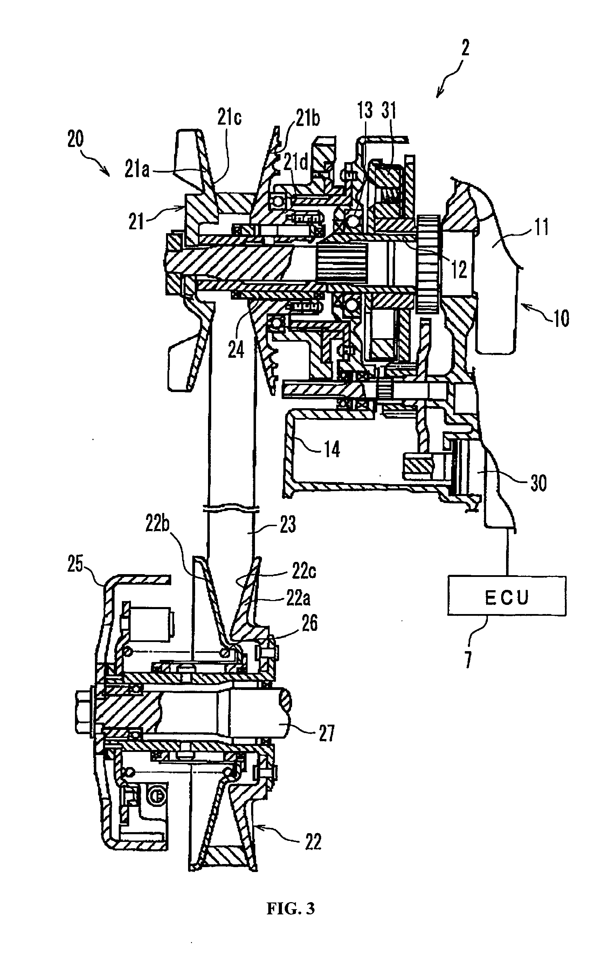

As shown in FIGs. 2 and 3, the engine unit 2 includes an engine (internal combustion engine) 10 and a transmission 20. In the present embodiment of the invention, the engine 10 is described as a forced-air-cooled four-stroke engine. However, the engine 10 may be other type of engine. For example, the engine 10 may be a water-cooled engine, oil-cooled engine or the like. The engine 10 may be a two-stroke engine, for example.

As shown in FIG. 3, the engine 10 has a crankshaft 11. A sleeve 12 is spline-fitted onto an outer circumference of the crankshaft 11. The sleeve 12 is rotatably supported by a housing 14 via a bearing 13. A one-way clutch 31 connected to an electric motor 30 is attached to an outer circumference of the sleeve 12.

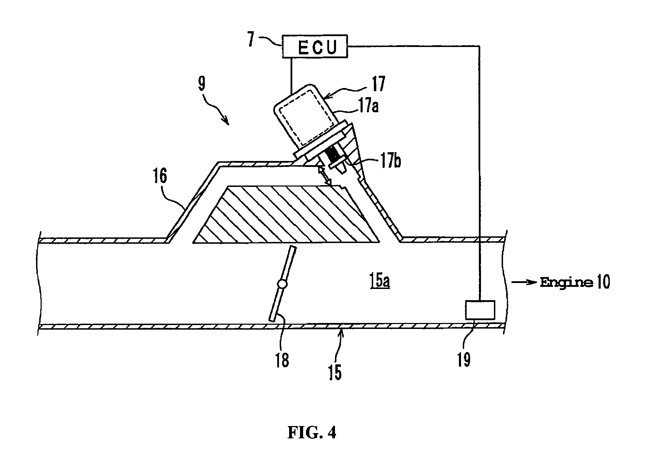

FIG. 4 is a cross sectional view of the proximity of an intake pipe 15 connected to the engine 10. The intake pipe 15 supplies air to the engine 10. A throttle valve 18 functioning as an intake valve is disposed in the intake pipe 15. The throttle valve 18 is a valve for adjusting an amount of air flowing through the intake pipe 15 by adjusting a flow passage area of the intake pipe 15. The throttle valve 18 is controlled by a throttle lever which is not shown. The throttle valve 18 opens when the throttle lever is moved toward an opening position and the amount of the air flowing through the intake pipe 15 increases.

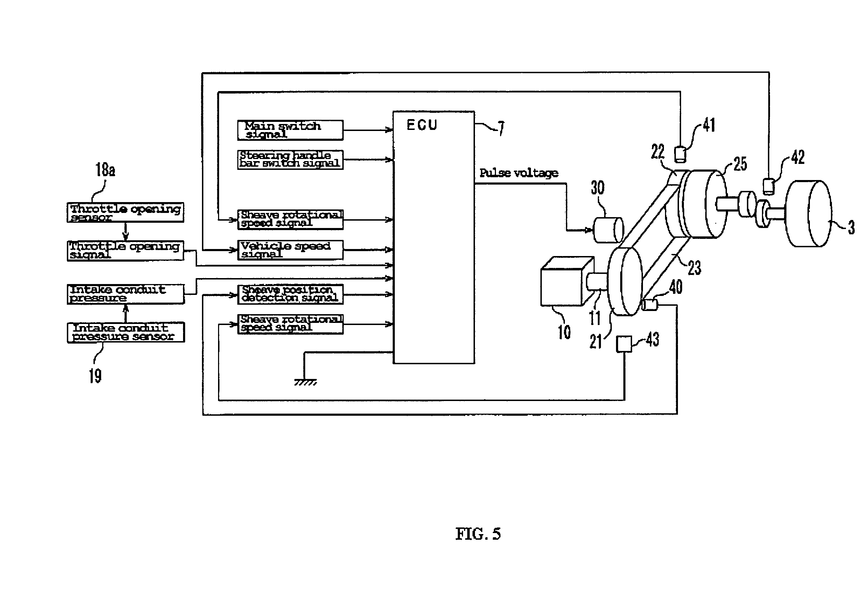

Additionally, a throttle valve opening sensor 18a (indicated in FIG. 5) is attached to the throttle valve 18. The throttle valve opening sensor 18a detects an opening of the throttle valve 18.

An intake pipe pressure sensor 19 is disposed in the intake pipe 15. More specifically, the intake pipe pressure sensor 19 is positioned at a downstream location 15a and closer to the engine 10 than the throttle valve 18 in the intake pipe 15. The intake pipe pressure sensor 19 detects a pressure at the downstream location 15a. As shown in FIG. 5, the intake pipe pressure sensor 19 outputs the pressure at the downstream location 15a as an intake pipe pressure to an ECU 7.

An ISC device 9 which is adapted to control an engine speed of the motorcycle 1 at idle by controlling the amount of the air flowing through the intake pipe 15 is attached to the intake pipe 15. More specifically, the ISC device 9 includes a bypass pipe 16, an air amount adjusting unit 17 and the ECU 7. The bypass pipe 16 bypasses the portion of the intake pipe 15 which incorporates the throttle valve 18. In other words, the bypass pipe 16 connects a location positioned upstream the throttle valve 18 of the intake pipe 15 and another location positioned downstream the throttle valve 18 to each other. The air amount adjusting unit 17 is a unit for controlling the amount of the air flowing through the intake pipe 15 by controlling a flow passage area of the bypass pipe 16. More specifically, the air amount adjusting unit 17 includes an actuator 17a and a bypass pipe valve 17b actuated by the actuator 17a. The bypass pipe valve 17b is positioned in the bypass pipe 16. The bypass pipe valve 17b adjusts the amount of air flowing through the bypass pipe 16 by adjusting a flow passage area of the bypass pipe 16. Additionally, the actuator 17a can be formed with, for example, a stepper motor or the like.

In the present embodiment, the transmission 20 is a belt type, electronically controlled CVT. However, the transmission 20 is not limited to a belt type, electronically controlled CVT. For example, the transmission 20 can be a mechanical type belt type CVT using centrifugal weights or a toroidal type CVT. Further, the transmission 20 can be a gear type transmission.

The transmission 20 includes a primary sheave 21, a secondary sheave 22 and a V-belt 23. The V-belt 23 is wrapped around the primary sheave 21 and the secondary sheave 22. A type of the V-belt is not specified. It can be a rubber belt type, resin block belt type, or the like.

The primary sheave 21 rotates together with the crankshaft 11. The primary sheave 21 includes a fixed sheave half 21a and a movable sheave half 21b. The fixed sheave half 21a is fixed to one end of the crankshaft 11. The movable sheave half 21b is located opposed to the fixed sheave half 21a. The movable sheave half 21b is movable in the axial direction of the crankshaft 11. One surface of the fixed sheave half 21a and one surface of the movable sheave half 21b are opposed to each other, which form a belt groove 21c into which the V-belt 23 is wrapped. As shown in FIG. 3, the movable sheave body 21b has a cylindrical boss section 21d through which the crankshaft 11 passes. A cylindrical slider 24 is fixed to an inner surface of the boss section 21d. The movable sheave half 21b integral with the slider 24 is movable in the axial direction of the crankshaft 11. Accordingly, a width of the belt groove 21c is variable.

The secondary sheave 22 is located rearward of the primary sheave 21. The secondary sheave 22 is mounted to a driven shaft 27 via a centrifugal clutch 25. To be more specific, the secondary sheave 22 includes a fixed sheave half 22a and a movable sheave half 22b. The movable sheave half 22b is opposed to the fixed sheave half 22a. The fixed sheave half 22a is connected to the driven shaft 27 via the centrifugal clutch 25. The movable sheave half 22b is movable in the axial direction of the driven shaft 27. One surface of the fixed sheave half 22a and one surface of the movable sheave half 22b are opposed to each other, which form a belt groove 22c into which the V-belt 23 is wrapped.

The centrifugal clutch 25 is engaged and disengaged according to the rotational speed of the fixed sheave half 22a. Specifically, when the rotational speed of the fixed sheave half 22a is less than a predetermined rotational speed, the centrifugal clutch 25 is not engaged. Therefore, the rotation of the fixed sheave body 22a is not transmitted to the driven shaft 27. On the other hand, when the rotational speed of the fixed sheave half 22a is equal to or more than the predetermined rotational speed, the centrifugal clutch 25 is engaged. The rotation of the fixed sheave body 22a thus is transmitted to the driven shaft 27.

The movable sheave half 22b is urged by a spring 26 in the direction that a width of the belt groove 22c decreases. Because of this force, the V-belt 23 is pulled toward the center in a radial direction at the secondary sheave 22 when the groove width of the belt groove 21C of the primary sheave 21 becomes smaller and a winding diameter of the V-belt 23 relative to the primary sheave 21 becomes larger. Thus, the movable sheave half 22b moves against the urging force of the spring 26 in the direction that the width of the belt groove 22c increases. Therefore, the diameter with which the V-belt 23 is wrapped around the secondary sheave 22 decreases.

Additionally, the groove width of the belt groove 21c of the primary sheave 21 is changeable by an electric motor 30 in such a manner that the movable sheave body 21b is moved in the axial direction of the crankshaft 11. The electric motor 30 can also be used also as a self starter motor.

A speed reducing mechanism 28 is connected to the driven shaft 27. The driven shaft 27 is connected to an axle 29 via the speed reducing mechanism 28. The rear wheel 3 is mounted to the axle 29. Therefore, as the driven shaft 27 rotates, the axle 29 and the rear wheel 3 rotate together.

A system for controlling the two-wheeled motorized vehicle 1 will now be described in detail with reference to FIG. 5. The motorcycle 1 has the ECU 7 functioning as a controlling unit. The ECU 7 controls the transmission 20, the engine 10, etc.

As shown in FIG. 5, a sheave position sensor 40 is connected to the ECU 7. The sheave position sensor 40 detects a position of the movable sheave body 21b of the primary sheave 21. The sheave position sensor 40 outputs the detected position of the movable sheave body 21b as a sheave position detection signal. The sheave position sensor 40 may be formed by a potentiometer, for example.

A primary sheave rotation sensor 43, a secondary sheave rotation sensor 41 and a vehicle speed sensor 42 are connected to the ECU 7. The primary sheave rotation sensor 43 detects a rotational speed of the primary sheave 21 and outputs the detected rotational speed of the primary sheave 21, i.e., a sheave rotational speed signal to the ECU 7. The secondary sheave rotation sensor 41 detects a rotational speed of the secondary sheave 22 and outputs the detected rotational speed of the secondary sheave 22 to the ECU 7 as a sheave rotational speed signal. The vehicle speed sensor 42 detects the rotational speed of the rear wheel 3 and outputs to the ECU 7 a vehicle speed signal based on the detected rotational speed.

A handlebar switch attached to the steering handlebars 4 is connected to the ECU 7. The handlebar switch outputs a handlebar SW signal when a rider operates the handlebar switch.

As described above, a throttle opening sensor 18a outputs a throttle opening signal to the ECU 7.

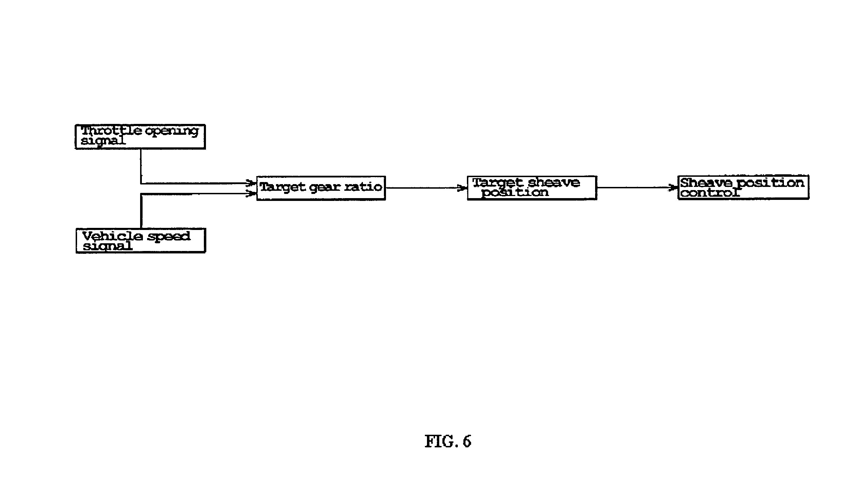

The ECU 7 controls the sheave position of the movable sheave body 21b of the primary sheave 21 based on the vehicle speed signal. In more detail, as shown in FIG. 6, the ECU 7 determines a target gear ratio based on the throttle opening and the vehicle speed. The ECU 7 calculates a target sheave position based on the determined target change-gear ratio. The sheave position of the removable sheave body 21b of the primary sheave 21 is controlled in accordance with the calculated target sheave position.

Additionally, a drive manner of the electric motor 30 is not limited to any particular one. In the present embodiment, the electric motor 30 is described as a motor which is operated using a pulse width modulation (PWM). More specifically, the ECU 7 has a drive circuit (not shown) of the electric motor 30 and a central processing unit (CPU) (not shown) outputting a signal to the drive circuit. The CPU outputs a pulse width modulation signal to the drive circuit. The drive circuit applies a pulse voltage corresponding to the pulse width modulation signal to the electric motor 30. Thereby, the electric motor 30 is driven. However, the electric motor 30 can be a stepper motor type.

The idle speed control (ISC) feed back control (hereafter referred to as "ISC F/B) is a control for changing the engine speed of the engine 10 in the idling state. The ISC F/B control is, for example, a control that increases the idling rotational speed to make the engine of the motorcycle 1 warmed up earlier at idle. More specifically, the ECU 7 calculates a target amount of intake air of the engine 10 based on the various conditions, objects, etc. described above. The actuator 17a actuates the bypass pipe valve 17b in accordance with the calculated target intake air amount. Thereby, the flow passage area of the bypass pipe 16 changes and the intake air amount to the engine 10 is adjusted.

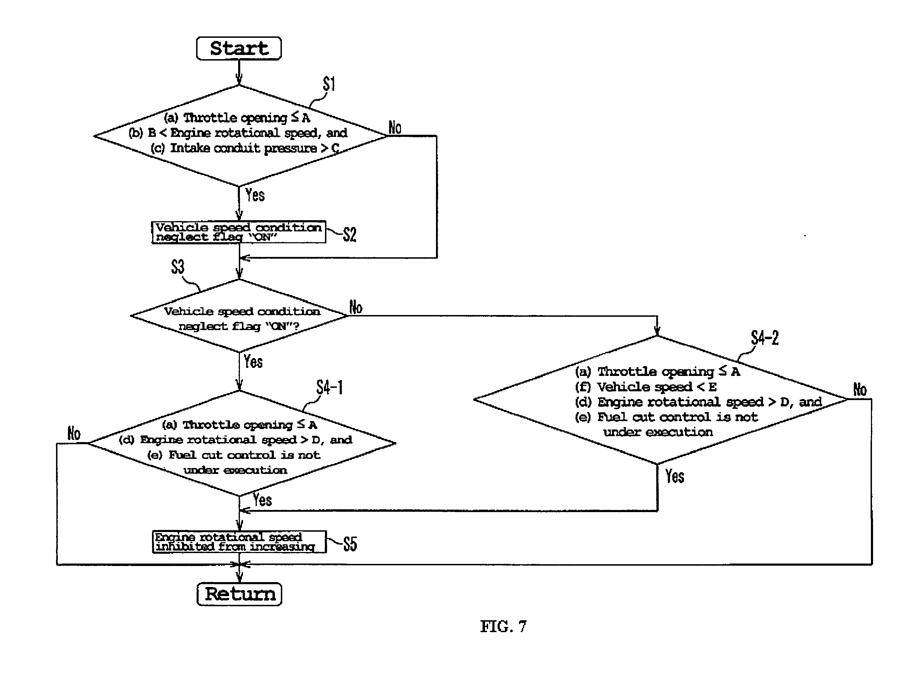

With reference to FIG. 7, the ISC F/B control will be described in more detail. First, in step S1, it is determined whether an abnormal increase in intake air (i.e., "an intake air amount increase abnormality") of the ISC device 9 exists or not, based on the intake pipe pressure detected by the intake pipe pressure sensor 19. More specifically, in step S1, it is determined whether the following conditions (a), (b) and (c) are continuously satisfied for a predetermined period or longer. If all of the conditions are satisfied, the intake air amount increase abnormality of the ISC device 9 is determined. Additionally, the predetermined period necessary for the determination of the satisfaction of conditions (a) through (c) can be properly decided in accordance with a model of the motorcycle 1 or the like. For example, the predetermined period necessary for the determination of the satisfaction of conditions (a) through (c) can be approximately five to ten seconds.
(a) the throttle opening ≤ A
(b) B < the engine speed
(c) the intake pipe pressure > C

Condition (a) is a condition to determine whether or not it is determined that the throttle opening is substantially closed. The symbol "A" designates an ISC F/B control allowable opening and can be properly decided in accordance with a model or settings of the motorcycle 1 or the like. If the throttle opening is larger than the opening "A," it is determined that the rider is proceeding to open the throttle valve. Therefore, an increasing intake of air is expected, and the ISC F/B control is not necessary to be restricted. Accordingly, condition (a) is provided as the pre-determination condition of the intake air amount increase abnormality of the ISC device 9.

In step S1, condition (c) is a substantial determination condition of the intake air amount increase abnormality of the ISC device 9. The inventors discovered, after making every effort to conduct research, that the intake air amount of the ISC device 9 and the intake pipe pressure interrelate with each other, and that the intake pipe pressure becomes larger than a normal intake pipe pressure when increase abnormality of the intake air amount occurs. As a result, condition (c) is provided as a substantial determination condition of the intake air amount increase abnormality of the ISC device 9. Additionally, condition (c) is a function of the engine speed in this embodiment, although the condition (c) can be an invariable.

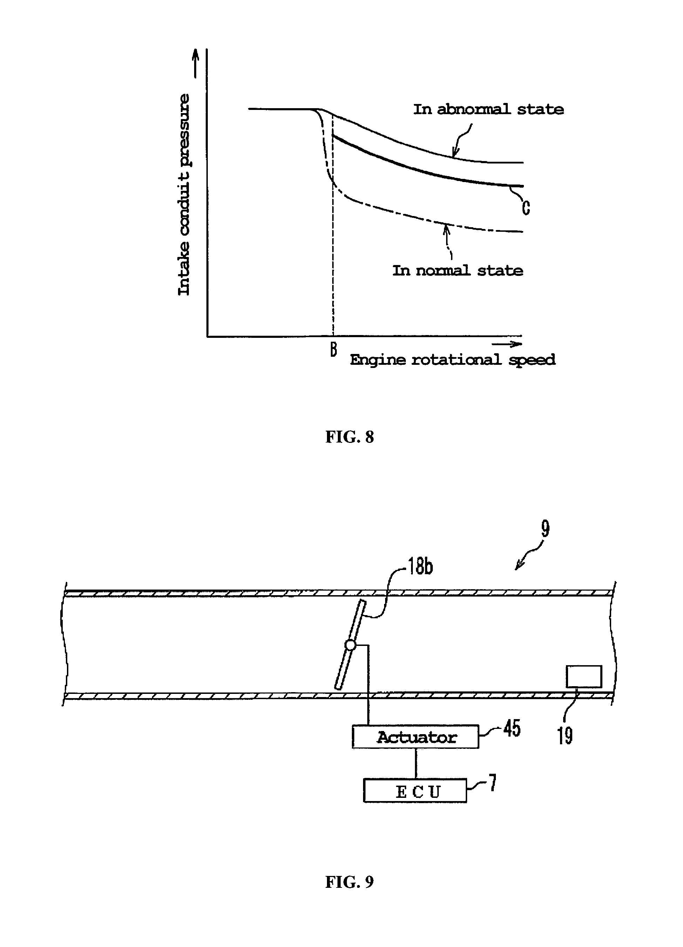

More specifically describing with reference to FIG. 8, the chain line of FIG. 8 is a graph indicating a normal state of the ISC device 9. The solid thin line is a graph indicating an abnormal state of the ISC device 9. The solid thick line indicates the pressure "C" of condition (c). As shown in FIG. 8, the intake pipe pressure sharply decreases when the engine speed becomes higher than a certain rotational speed in the normal state of the ISC device 9. This is because that the bypass pipe 16 is closed with the increase of the engine speed. To the contrary, if abnormality occurs in the ISC device 9 and the bypass pipe valve 17b continuously opens even though the engine speed increases, the intake pipe pressure does not rapidly decrease. Therefore, as shown in FIG. 8, if "C" which is the function of the pressure is set to be an intake pipe pressure which is slightly smaller than the intake pipe pressure in the abnormal state of the ISC device 9, the intake air amount increase abnormality can be detected by condition (c) .

Additionally, "B" of the condition (b) is provided to avoid erroneous determination. That is, even though the ISC device 9 is normal, a condition such that the engine speed is relatively higher than the engine speed in the normal idling state can continue immediately after the start of the engine 10 or when the engine 10 has not yet been warmed up, although the engine does not reach a state such that the engine speed at idle becomes close to the maximum speed. A difference between the intake pipe pressure under the circumstances and the intake pipe pressure in the abnormal state of the ISC device 9 is small. Accordingly, there is a risk that an abnormality of the ISC device 9 is erroneously determined. In other words, an abnormality of the ISC device 9 can be detected because of the reasons that it is immediately after the start of the engine 10 or that the engine 10 has not yet been warmed up, even though no abnormality of the ISC device 9 occurs. Therefore, by providing condition (b), an abnormality determination of the ISC device 9 is restrained from being performed before the engine speed reaches a speed at which an abnormality of the ISC device 9 is positively determined.

As shown in FIG. 7, normally, the rotational speed "B" is set to be in an engine speed range where the difference between the intake pipe pressure given when the ISC device 9 is normal and the intake pipe pressure given when the ISC device 9 is abnormal is going to be larger, and to be a value existing in close proximity to the maximum rotational speed that is barely determined to be in the idling state.

As thus described, if conditions (a), (b) and (c) are continuously satisfied for the predetermined period or for a period longer than the predetermined period in step S1, the intake air amount increase abnormality of the ISC device 9 is determined. As shown in FIG. 7, if the abnormality of the ISC device 9 is determined in step S1, a vehicle speed condition neglect flag is set to be "ON" in step S2. On the other hand, if the abnormality of the ISC device 9 is not determined in step S1, the vehicle speed condition neglect flag is not set to be "ON" and is still "OFF."

Next, in step S3, it is determined whether the vehicle speed condition neglect flag has been set to be "ON" or not. That is, it is determined whether the intake air amount increase abnormality of the ISC device 9 occurs or not. If the vehicle speed condition neglect flag has been set to be "ON," the program proceeds to step S4-1. On the other hand, if the vehicle speed condition neglect flag is still "OFF," the program proceeds to a step S4-2.

Step S4-1 is performed when the intake air amount increase abnormality of the ISC device 9 is detected. In step S4-1, it is determined whether the following conditions (a), (d) and (e) are continuously satisfied for a predetermined period or longer. Additionally, the predetermined period necessary for the determination of the satisfaction of conditions (a), (d) and (e) can be properly decided in accordance with a model of the motorcycle 1 or the like. For example, the predetermined period necessary for the determination of the satisfaction of conditions (a), (d) and (e) can be approximately five to ten seconds.
(a) the throttle opening ≤ A
(d) the engine speed > D
(e) the fuel cut control is not under execution

Additionally, condition (a) required in step S4-1 is the same as condition (a) determined in step S1.

The symbol "D" in condition (d) designates a rotational speed of the engine 10 given when the centrifugal clutch 25 is switched to the connected state from the disconnected state. That is, condition (d) is a condition that the centrifugal clutch 25 is connected. Condition (d) is not always determined in step S4-1. If, however, the ISC F/B control is not desired to be performed when the centrifugal clutch 25 is disconnected, it is preferable to provide condition (d) as a condition of step S4-1.

Also, condition (e) in step S4-1 is not always required. However, by providing condition (e) as a condition of step S4-1, the ISC F/B control under the fuel cut control can be restricted. If the ISC F/B control is performed during a period that the fuel cut control is made for another control purpose, the engine speed excessively decreases and the engine can stall. It is, therefore, preferable to provide condition (e) as one of the conditions of step S4-1.

If conditions (a), (d) and (e) are continuously satisfied for the predetermined period or longer in step S4-1, the program proceeds to step S5 to inhibit the rotational speed of the engine 10. Means for inhibiting the rotational speed of the engine 10 from increasing is not limited to any particular one. For example, reduction of supplied fuel, delaying of ignition times, combination of these measures or the like can inhibit the rotational speed of the engine 10 from increasing.

On the other hand, if conditions (a), (d) and (e) are not continuously satisfied for the predetermined period, the program ends without inhibiting the rotational speed.

If, in step S3, the vehicle speed neglect flag is "off," it is determined that the intake air amount abnormality of the ISC device 9 does not occur, and the program proceeds to step S4-2. Step S4-2 is a step for determining whether or not the motorcycle is running by inertia, i.e., at a relatively slow speed because of the substantial close of the throttle valve. If it is determined, in step S4-2, that the motorcycle is running by inertia, the program proceeds to step S5, and the engine speed is suppressed. Therefore, the fuel efficiency of the motorcycle running by inertia is improved. On the other hand, if it is not determined that the motorcycle is running by inertia at a relatively slow speed in step S4-2, the program is terminated without suppression of the engine speed.

More specifically, the following conditions (a), (f), (d) and (e) are determined in step S4-2.
(a) the throttle opening ≤ A
(f) the vehicle speed < E
(d) the engine speed > D
(e) the fuel cut control is not under execution

In those conditions, condition (a) is the same as condition (a) determined in step S1. Conditions (d) and (e) are the same as conditions (d) and (e) determined in step S4-1. Additionally, condition (f) is a condition to avoid the suppression of the engine speed when the vehicle speed is overly fast.

As thus described, the vehicle speed sensor 42 detects a rotational speed of the rear wheel 3 functioning as the drive wheel to obtain a vehicle speed. The vehicle speed thus can be precisely detected. As a result, control of the motorcycle 1 using the vehicle speed can be performed more accurately. More specifically, in this embodiment, control of the gear ratio of the transmission 20 can be performed more accurately.

In this embodiment, the intake air amount increase abnormality of the ISC device 9 can be detected without using the vehicle speed. Therefore, abnormality of the ISC device 9 can be properly determined anytime, for example, when the vehicle is in an idling state in which the rear wheel 3, whose rotational speed is detected by the vehicle speed sensor 42, is spaced from the ground because the center stand 8 is erected.

In this embodiment, any sensor for detecting the use of the center stand 8, any additional vehicle speed sensor or the like are not required to be added to detect an abnormality of the ISC device 9. Accordingly, the motorcycle 1 that has such a simple structure and is inexpensive can be realized.

That is, the vehicle speed sensor 42 is provided for detecting the rotational speed of the rear wheel 3 and an abnormality of the ISC device 9 is detected based on the intake pipe pressure; thereby, both precise detection of the vehicle speed and accurate control of the motorcycle 1 and accurate abnormality detection of the ISC device 9 can be realized with such a simple and inexpensive structure.

When an abnormality of the ISC device 9 is detected, the engine speed is inhibited from increasing in principle, unless any fuel cut control is performed in another control process. Thereby, excessive increase of the engine speed can be avoided. Consequently, fuel consumption can be also improved.

Also, as shown in FIG. 7, the condition such that the engine speed is higher than the predetermined rotational speed B is determined in step S1. Thereby, as described above, the precise detection of the intake air amount increase abnormality of the ISC device 9 is practicable. In other words, any erroneous detection of the intake air amount increase abnormality of the ISC device 9 can be restricted.

Further, if conditions (a), (b) and (c) are continuously satisfied for the predetermined period or longer in step S1, the intake air amount increase abnormality of the ISC device 9 is detected; thereby, the erroneous detection of this abnormality can be effectively restricted. If any abnormality occurs with the ISC device 9, conditions (a), (b) and (c) are normally continuously satisfied for the predetermined time or longer. If conditions (a), (b) and (c) are satisfied only for a moment and conditions (a), (b) and (c) are not satisfied afterwards, no abnormality of the ISC device 9 is likely to occur. Therefore, it is preferable to set it to be a condition for an abnormality determination of the ISC device 9 that conditions (a), (b) and (c) are continuously satisfied for the predetermined period or longer.

Additionally, because condition (d) is determined in step S4-1, the suppression control of the engine speed which is a relatively low rotational speed at which the centrifugal clutch 25 is not connected can be restricted. As a result, only the situation in which the rotational speed of the rear wheel 3 increases due to the intake air amount increase abnormality of the ISC device 9 can be accurately prevented from occurring.

Also, if it is determined in step S4-2 that conditions (a), (f), (d) and (e) are satisfied under the condition that an abnormality of the ISC device 9 is not determined, the engine speed is inhibited from increasing in step S5. Thereby, the excessive increase of the engine speed given when the motorcycle 1 is running by inertia can be inhibited. Consequently, the fuel consumption of the motorcycle 1 can be improved.

In the above embodiment, the motorcycle 1 equipped with the ISC device 9 having the bypass pipe 16 is provided as an example. In the present invention, however, the ISC device 9 is not limited to the device that has the bypass pipe. For example, as shown in FIG. 9, the ISC device 9 can be a device which uses an electronic control type throttle valve 18b actuated by the actuator 45. In the ISC device 9 shown in FIG. 9, an opening of the throttle valve 18b is electronically controlled by the ECU 7.

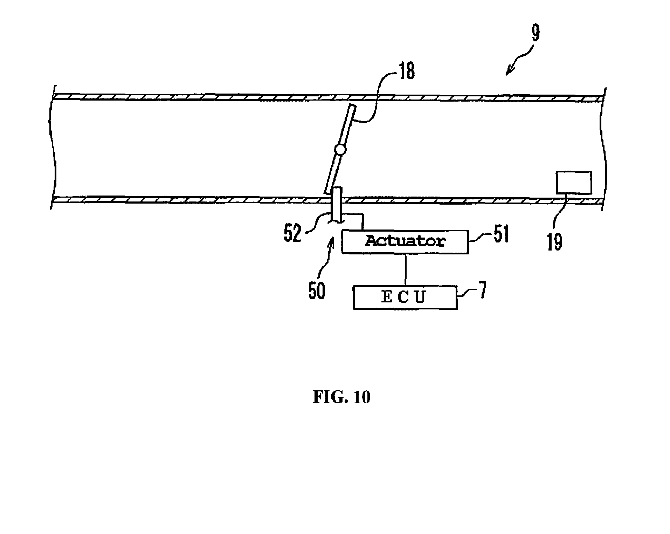

As shown in FIG. 10, the ISC device 9 can be formed with a throttle opening adjusting unit 50 which is not the electronic control type but compulsorily adjusts the opening of the throttle valve 18, and the ECU 7. The throttle opening adjusting unit 50 can be formed with, for example, a push member 52 pushing the throttle valve 18 and an actuator 51 actuating the push member 52. More specifically, the throttle opening adjusting unit 50 can be formed with, for example, a solenoid element.

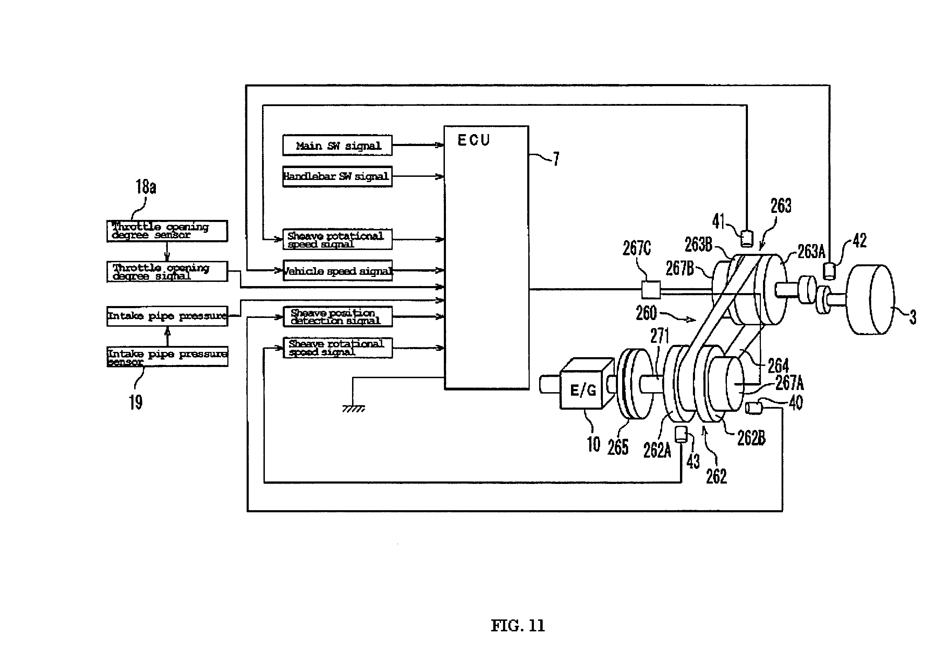

FIG. 11 is a block diagram illustrating a system for controlling the two-wheeled motorized vehicle in accordance with a further embodiment of the present invention. In this embodiment, variable transmission 260 is a belt type ECVT. However, the belt of the variable transmission 260 in accordance with this embodiment is a so-called metal belt 264.

The actuator of ECVT in the first described embodiment is the electric motor 30. However, the actuator of ECVT is not limited to the electric motor 30. The actuator of ECVT in the present embodiment described below is a hydraulic actuator.

In the first described embodiment, the clutch is a centrifugal clutch 25 located between the driven shaft (output shaft) 27 of the variable transmission 20 and the rear wheel (drive wheel) 3 and mechanically engaged or disengaged depending on the rotational speed of the engine 10. However, the clutch in accordance with the present embodiment is a clutch which is located between the engine 10 and the input shaft 271 of the variable transmission 260 and controlled to be engaged or disengaged depending on the rotational speed of the engine 10. Specifically, in the present embodiment, the electrically controlled multiple friction clutch 265 is used as a clutch.

As shown in FIG. 11, two-wheeled motorized vehicle in the present embodiment includes the electrically controlled multiple friction clutch 265 and the ECVT type variable transmission 260. The variable transmission 260 includes the primary sheave 262, the secondary sheave 263, and the metal belt 264 wound around the primary sheave 262 and the secondary sheave 263. The primary sheave 262 includes the fixed sheave half 262A and the movable sheave half 262B. The secondary sheave 263 includes the fixed sheave half 263A and the movable sheave half 263B.

A primary sheave rotation sensor 43 is equipped to the primary sheave 262. A secondary sheave rotation sensor 41 is equipped to the secondary sheave 263.

The two-wheeled motorized vehicle includes a hydraulic cylinder 267A, a hydraulic cylinder 267B, and a hydraulic control valve 267C connected to the hydraulic cylinder 267A and 267B. The hydraulic cylinder 267A adjusts the groove width of the primary sheave 262 by driving the movable sheave half 262B of the primary sheave 262. The hydraulic cylinder 267B adjusts the groove width of the secondary sheave 263 by driving the movable sheave half 263B of the secondary sheave 263. The hydraulic control valve 267C is a valve that adjusts the hydraulic pressure applied to the hydraulic cylinder 267A and 267B. The hydraulic control valve 267C controls the hydraulic cylinder 267A and 267B in the way when either one of them has higher hydraulic pressure the other one has lower hydraulic pressure. This hydraulic control valve 267C is controlled by ECU7.

The multiple friction clutch 265 is located between the engine 10 and the input shaft 271 of the variable transmission 260, and controlled depending on the rotational speed of the engine 10 (described as "engine rotational speed" hereafter) . For example, the multiple friction clutch 265 is controlled in the way it is connected when the engine speed is beyond the predetermined value and it is disconnected when the engine speed is below the predetermined value.

The same control and abnormality detection as in the first described embodiment are also performed in the present embodiment. In the first described embodiment, D of condition (d) in step S4-1 (see FIG. 7) in the ISC F/B control indicates the rotational speed of the engine 10 when the centrifugal clutch 25 comes to be engaged from the disengaged state. In the present embodiment, the D described above indicates the rotational speed of the engine 10 when the multiple friction clutch 265 comes to be engaged from the disengaged state.

The same effect as in the first described embodiment is also obtained in the present embodiment.

It should be understood that the embodiments described herein are merely exemplary and that various modifications may be made thereto without departing from the scope of the present invention.

For example, the vehicle in the present invention may be a two-wheeled motorized vehicle other than a scooter-type vehicle. More specifically, the vehicle of the present invention can be an off-road type, a motorcycle type, a scooter type, or the so-called moped type. Also, other than a two-wheeled motorized vehicle, the vehicle in the invention may be a straddle-type vehicle. Specifically, the vehicle of the present invention may be, for example, an ATV (All Terrain Vehicle) or the like. Further, the vehicle in the invention may be a vehicle other than a straddle type vehicle, such as a four-wheeled motorized vehicle.

The vehicle according to the present invention can be a vehicle having no CVT. Also, the transmission 20 can be, for example, a mechanical type belt type CVT using centrifugal weights or a toroidal type CVT. Further, the transmission 20 can be a gear type transmission.

The engine 10 can be another type of engine other than the forced air-cooled, four-stroke engine. For example, the engine 10 may be a water-cooled engine, oil-cooled engine or the like. The engine 10 may be a two-stroke engine, for example.

In place of the centrifugal clutch 25, another clutch may be provided, which is regulated by an actuator or the like such that the clutch is engaged or disengaged in accordance with a detection value of the rotational speed of the engine 10.

The vehicle speed sensor 42 can be a sensor which detects a rotational speed of the driven shaft 27, calculates a rotational speed of the rear wheel 3 from the detected rotational speed of the driven shaft 27 and outputs a vehicle speed signal to the ECU 7 based on the calculated rotational speed of the rear wheel 3.

A structure has been described in which the intake pipe pressure sensor 19 is positioned at the location closer to the engine 10 than the coupled portion of the intake pipe 15 with the downstream portion of the bypass pipe. The intake pipe pressure sensor 19, however, is only required to be positioned in such a manner that the sensor 19 is able to detect pressure of the downstream location 15a. For example, the intake pipe pressure sensor 19 can be positioned at a location spaced apart from the engine 10 more than the coupled portion of the intake pipe 15 with the downstream portion of the bypass pipe. Also, the intake pipe pressure sensor 19 can be placed externally of the intake pipe 15.

Condition (b) determined in step S1 and shown in FIG. 7 is dispensable.

Conditions (d) and (e) determined in step S4-1 and shown in FIG. 7 are dispensable.

The rear wheel 3 functioning as the drive wheel can be directly coupled with the driven shaft 27 functioning as the output shaft. Alternatively, the rear wheel 3 as the drive wheel can be indirectly coupled with the driven shaft 27 as the output shaft through the reduction mechanism 28, the axle 29 or the like, as described in the above embodiment.

The term "idling rotational speed" means an engine speed of a vehicle at idle.

The sentence "an (the) intake pipe pressure is high" means that an absolute pressure in the intake pipe is high. In other words, the sentence means that a negative pressure in the intake pipe is small.

"Clutch engaged or disengaged according to the rotational speed" includes a clutch that is controlled to be engaged or disengaged according to the rotational speed along with the centrifugal clutch that is mechanically engaged or disengaged according to the rotational speed.

The present invention is useful for vehicles such as, for example, a straddle type vehicle.

### Description of Reference Numerals

- 1: motorcycle
- 2: engine unit
- 3: rear wheel (drive wheel)
- 4: steering handlebars
- 5: front fork
- 6: front wheel
- 7: ECU
- 8: center stand
- 9: idle speed control (ISC) device
- 10: engine
- 15: intake pipe
- 16: bypass pipe
- 17a: actuator
- 17b: bypass pipe valve
- 18: throttle valve
- 18a: throttle opening sensor
- 19: intake pipe pressure sensor
- 20: transmission
- 25: centrifugal clutch
- 27: driven shaft
- 30: electric motor
- 40: sheave position sensor
- 41: secondary sheave rotation sensor
- 42: vehicle speed sensor
- 43: primary sheave rotation sensor
- 45: actuator
- 50: throttle opening controller

## Claims

1. A vehicle (1) comprising:
an engine (10);
a drive wheel (3) driven by power of the engine (10);
a vehicle speed sensor (42) for detecting rotational speed of the drive wheel (3);
an intake pipe (15) for supplying air to the engine (10);
an intake pipe pressure sensor (19) for detecting pressure in a section of the intake pipe (15);
an intake valve (18) for adjusting the flow passage area of the intake pipe (15) and located further from the engine (10) than the section of the intake pipe (15) where the pressure is detected by the intake pipe pressure sensor (19);
an idle speed control device (9) for performing an idle speed control that controls an idling rotational speed by controlling the amount of air flowing through the intake pipe (15); and
a controlling unit (7) for detecting an abnormality in the idle speed control device (9) based on the pressure in the intake pipe (15) detected by the intake pipe pressure sensor (19), and for suppressing an increase of the engine speed when an abnormality in the idle speed control device (9) is detected.

2. The vehicle (1) according to Claim 1, further comprising:
an electronic continuously variable transmission (20) having an input shaft (11) connected to the engine (10) and an output shaft (27) and capable of continuously controlling a transmission gear ratio between the input shaft (11) and the output shaft (27).

3. The vehicle (1) according to Claim 1 or 2, wherein the idle speed control device (9) has:
a bypass pipe (16) for connecting an upstream side and a downstream side of the intake valve (18) of the intake pipe (19); and
a bypass pipe valve (17b) for controlling the amount of air flowing in the intake pipe (15) by controlling the flow passage area of the bypass pipe (16).

4. The vehicle (1) according to Claim 1, 2 or 3, wherein the controlling unit (7) detects an abnormality of the idle speed control device (9) when the pressure in the intake pipe (15) detected by the intake pipe pressure sensor (19) is higher than a predetermined pressure.

5. The vehicle (1) according to Claim 1, 2 or 3, wherein the controlling unit (7) detects that the idle speed control device (9) is abnormal if the pressure in the intake pipe (15) detected by the intake pipe pressure sensor (19) is higher than a predetermined pressure, a throttle opening is equal to or less than a predetermined opening, and the rotational speed of the engine (10) is equal to or higher than a predetermined rotational speed.

6. The vehicle (1) according to Claim 4 or 5, wherein the controlling unit (7) detects that the idle speed control device (9) is abnormal if the condition that the pressure in the intake pipe (15) detected by the intake pipe pressure sensor (19) is higher than the predetermined pressure is continuously detected for a predetermined period or longer.

7. The vehicle (1) according to any one of Claims 2 to 6, further comprising:
a clutch (25) located between the output shaft (27) and the drive wheel (3) to be engaged or disengaged depending on the rotational speed of the engine (10).

8. The vehicle (1) according to any one of Claims 2 to 6, further comprising:
a clutch (265) located between the engine (10) and the input shaft (11) to be engaged or disengaged depending on the engine speed (10).

9. The vehicle (1) according to Claim 7 or 8, wherein the controlling unit (7) suppresses the increase of the engine speed when a throttle opening is equal to or lower than a predetermined opening and the engine speed is higher than the rotational speed at which the clutch (26, 265) engages, after an abnormality in the idle speed control device (9) is detected.

10. The vehicle (1) according to Claim 7 or 8, wherein the controlling unit (7) suppresses the increase of the engine speed when an abnormality of the idle speed control device (9) is not detected, and a throttle opening is lower than or equal to a predetermined opening, the vehicle speed detected by the vehicle speed sensor (42) is lower than or equal to a predetermined vehicle speed, and the engine speed is higher than the rotational speed at which the clutch (26, 265) engages.

11. The vehicle (1) according to any preceding Claim, further comprising a stand (8) for lifting the drive wheel (3) off the ground.

12. A controller (7) for a vehicle (1) having:
an engine (10);
a drive wheel (3) driven by power of the engine (10);
a vehicle speed sensor (42) for detecting rotational speed of the drive wheel (3);
an intake pipe (15) for supplying air to the engine (10);
an intake pipe pressure sensor (19) for detecting pressure in a section of the intake pipe (15);
an intake valve (18) for adjusting the flow passage area of the intake pipe (15) and located further from the engine (10) than the section of the intake pipe (15) where the pressure is detected by the intake pipe pressure sensor (19); and
an idle speed control device (9) for performing an idle speed control that controls an idling rotational speed by controlling the amount of air flowing through the intake pipe (15),
wherein an abnormality of the idle speed control device (9) is detected based on the pressure in the intake pipe (15) detected by the intake pipe pressure sensor (19), and an increase of the engine speed is suppressed when an abnormality of the idle speed control device (9) is detected.

13. An abnormality detection system for idle speed control device (9) used in a vehicle (1) having:
an engine (10);
a drive wheel (3) driven by power of the engine (10);
a vehicle speed sensor (42) for detecting rotational speed of the drive wheel (3);
an intake pipe (15) for supplying air to the engine (10);
an intake pipe pressure sensor (19) for detecting pressure in a section of the intake pipe (15);
an intake valve (18) for adjusting the flow passage area of the intake pipe (15) and located further from the engine (10) than the section of the intake pipe (15) where the pressure is detected by the intake pipe pressure sensor (19); and
an idle speed control device (9) for performing an idle speed control that controls an idling rotational speed by controlling the amount of air flowing through the intake pipe,
wherein an abnormality of the idle speed control device (9) is detected based on the pressure in the intake pipe (15) detected by the intake pipe pressure sensor (19).

14. A method of controlling a vehicle (1) having:
an engine (10);
a drive wheel (3) driven by power of the engine (10);
a vehicle speed sensor (42) for detecting rotational speed of the drive wheel (3);
an intake pipe (15) for supplying air to the engine (10);
an intake pipe pressure sensor (19) for detecting pressure in a section of the intake pipe (15);
an intake valve (18) for adjusting the flow passage area of the intake pipe (15) and located further from the engine (10) than the section of the intake pipe (15) where the pressure is detected by the intake pipe pressure sensor (19); and
an idle speed control device (9) for performing an idle speed control that controls an idling rotational speed by controlling the amount of air flowing through the intake pipe,
wherein the method comprises detecting an abnormality of the idle speed control device (9) based on the pressure in the intake pipe (15) detected by the intake pipe pressure sensor (19), and then suppressing an increase of the engine speed.

15. A method of detecting an abnormality of an idle speed control device (9) used in a vehicle (1) having:
an engine (10);
a drive wheel (3) driven by power of the engine (10);
a vehicle speed sensor (42) for detecting rotational speed of the drive wheel (3);
an intake pipe (15) for supplying air to the engine (10);
an intake pipe pressure sensor (19) for detecting pressure in a section of the intake pipe (15);
an intake valve (18) for adjusting the flow passage area of the intake pipe (15) and located further from the engine (10) than the section of the intake pipe (15) where the pressure is detected by the intake pipe pressure sensor (19); and
an idle speed control device (9) for performing an idle speed control that controls an idling rotational speed by controlling the amount of air flowing through the intake pipe,
wherein the method comprises the step of detecting an abnormality of the idle speed control device (9) based on the pressure in the intake pipe (15) detected by the intake pipe pressure sensor (19).
